# EUROPEAN PATENT SPECIFICATION

(11) **EP 2 520 615 B1**
(45) Date of publication and mention of the grant of the patent: **10.08.2016**
(21) Application number: 12162666.7
(22) Date of filing: 30.03.2012
(51) Int. Cl.: C08L 23/06, B32B 27/32, C08J 5/18, B32B 7/02, B32B 27/08, B32B 27/18, B32B 27/30, B32B 27/36, B32B 1/02, C08K 5/00, C08K 5/057, C08K 5/098, B32B 27/28

(54) **High Density Polyethylene Blend Films**
Folien aus hochdichter Polyethylenmischung
Films de mélanges de polyéthylènes haute densité

(30) Priority: 03.05.2011 US 201113100250
(43) Date of publication of application: 07.11.2012
(73) Proprietor: CURWOOD, INC., Oshkosh, Wisconsin 54904 (US)
(72) Inventor: Nelson, Kevin Philip, Appleton, WI Wisconsin 54914 (US); Barr, Curtis Randolph, Neenah, WI Wisconsin 54956 (US); Glaser, Kevin David, Oshkosh, WI Wisconsin 54902 (US); Mengel, Matthew LeRoy, Oshkosh, WI Wisconsin 54901 (US); Osborn, Christopher Lynn, Germantown, WI Wisconsin 53022 (US); Priscal, Michael Drew, Oshkosh, WI Wisconsin 54901 (US)
(74) Representative: Smaggasgale, Gillian Helen

(56) References cited:
- EP-A2- 0 319 258
- EP-A2- 2 316 644
- WO-A1-2008/112050
- US-A1- 2002 103 300
- US-B1- 7 176 259

## Description

### BACKGROUND OF THE INVENTION

This present application relates to a packaging film, specifically a high density polyethylene (HDPE) blended with a nucleating agent and hydrocarbon resin.

Moisture protection is an important function of many packages. For example, in the cereal market, HDPE is commonly used for its moisture barrier property. Film thickness is increased to match the desired level of moisture barrier, but this adds weight and cost to the package.

US 6,969,556 relates to a sheet or film which comprises at least one layer comprising a first material which is very highly crystalline polymer (preferably polypropylene of 99% or greater isotacity) together with at least one second material in an amount sufficient to improve one or more of the barrier properties, mechanical properties and/or optical properties of the sheet. The second material comprises (a) a nucleating agent; (b) a polymeric material having a ring and ball softening point from about 110° C. to about 170° C. and/or (c) a hydrogenated resin such as dicyclopentadiene hydrogenated resin, a hydrogenated mixed monomer resin; and/or a resin obtainable from a mixture of a-methyl styrene, indene and/or vinyl toluene monomers.

US 2008/0118749 relates to barrier films prepared from a blend of two high density polyethylene blend components and a high performance organic nucleating agent. The two high density polyethylene blend components have substantially different melt indices. Large reductions in the moisture vapor transmission rate of the film are observed in the presence of the nucleating agent when the melt indices of the two blend components have a ratio of greater than 10/1.

US 6,432,496, 6,969,740, and 7,176,259 relate to oriented HDPE films containing hydrocarbon resins having improved moisture barrier. The effects of hydrocarbon resins in oriented films are not predictive of the effect on non-oriented films. The mechanical properties of non-oriented films are more likely to be adversely affected by additives than are oriented films.

WO 2010/104628 relates to polyolefin composition blends comprising an additive composition comprising a hydrocarbon resin and a high performance nucleating agent. The nucleating agent is used to increase the crystallization temperature and, therefore, decrease the amount of hydrocarbon resin needed. According to WO 2010/104628, reducing the amount of hydrocarbon resin reduces the compromising effects of the hydrocarbon resin on the film's mechanical properties. WO 2010/104628 provides examples of polypropylene polyolefin compositions.

There is a need for HDPE films with improved barrier properties without increased film thickness.

### BRIEF SUMMARY OF THE INVENTION

The need for HDPE films with improved barrier properties without undesirable film thickness can be met by a film comprising at least one moisture barrier layer comprising a polymer blend comprising (a) high density polyethylene in an amount from 69% to 90% by weight of the blend, wherein the high density polyethylene has a melt index of at least 1.0g/10 min and a density greater than 0.958 g/cc; (b) hydrocarbon resin in an amount from 5% to 30% by weight of the blend; and (c) nucleating agent in an amount from 0.01 % to 1 % by weight of the blend; and at least one additional layer comprising an ionomer, a high density polyethylene, a polyethylene terephthalate, a copolymer of ethylene and an ester, or a styrene butadiene copolymer; wherein the film is a non-oriented film and has a normalized moisture vapor transmission rate of no greater than 118 g-micron/m²/day (0.30 g-mil/100 in²/day) measured at 37.8 °C (100 °F) and 90 % external relative humidity. The nucleating agent may be a glycerol alkoxide salt, hexahydrophthalic acid salt, glycerolate salt or calcium hexahydrophthalate.

In some aspects, the film further may comprise an oxygen barrier material, and the film has a normalized oxygen transmission rate of less than about 59,100 cc-micron/m²/day (150 cc-mil/100 in²/day), preferably less than about 39,400 cc-micron/m²/day (100 cc-mil/100 in²/day). In other aspects, the film may further comprise at least one layer comprising an ionomer, at least one layer comprising a high density polyethylene, at least one layer comprising a polyester, at least one layer comprising a styrene butadiene copolymer, or combinations of the above. The film may have a thickness of less than 76.2 micron (3.00 mil) or less than 43.2 micron (1.70 mil).

In yet other aspects, the film may comprise a second moisture barrier layer comprising a blend. The blend comprises high density polyethylene, hydrocarbon resin and nucleating agent. The blend comprises from about 69 % by weight to about 90 % by weight high density polyethylene, wherein the high density polyethylene has a melt index of at least 1.0 g/10 min and a density greater than 0.958 g/cc. The blend further comprises from about 5 % by weight to about 30 % by weight hydrocarbon resin and from about 0.01 % by weight to about 1 % by weight nucleating agent.

In a further aspect, a polymer blend of at least three polymers is provided. The blend comprises high density polyethylene, hydrocarbon resin and nucleating agent. The blend comprises from about 69% by weight to about 90% by weight high density polyethylene, preferably from about 75 % by weight to about 85 % by weight high density polyethylene. The high density polyethylene has a melt index of at least 1.0 g/10 min and a density greater than 0.958 g/cc. The blend further comprises from about 5 % by weight to about 30 % by weight hydrocarbon resin, preferably from about 10 % by weight to about 15 % by weight hydrocarbon resin. The blend also comprises from about 0.01 % by weight to about 1 % by weight nucleating agent, preferably from about 0.04 % by weight to about 0.10 % by weight nucleating agent.

In another aspect, a film layer comprising a blend of high density polyethylene, hydrocarbon resin and nucleating agent is provided. The blend comprises from about 69 % by weight to about 90 % by weight high density polyethylene, preferably from about 75 % by weight to about 85 % by weight high density polyethylene, wherein the high density polyethylene has a melt index of at least 1.0 g/10 min and a density greater than 0.958 g/cc. The blend further comprises from about 5 % by weight to about 30 % by weight hydrocarbon resin, preferably from about 10 % by weight to about 15 % by weight hydrocarbon resin. The blend also comprises from about 0.01 % by weight to about 1 % by weight nucleating agent, preferably from about 0.04 % by weight to about 0.10 % by weight nucleating agent. The film layer is non-oriented and has a normalized moisture vapor transmission rate of no greater than 118 g-micron/m²/day (0.30 g-mil/100 in²/day), preferably no greater than 79 g-micron/m²/day (0.20 g-mil/100in²/day), more preferably no greater than 59 g-micron/m²/day (0.15 g-mil/100 in²/day), as measured at about 37.8 °C (100 °F) and 90 % external relative humidity.

In still another aspect, a packaging article comprises the non-oriented film having the moisture barrier layer as described above. In some aspects, the packaging article is a rigid article or a semi-rigid article.

### BRIEF DESCRIPTION OF THE DRAWINGS

FIG. 1 is a schematic representation of a blown film process for producing a multilayer film described in the present application.
FIG. 2 is a cross-sectional view of a tubular extrudate made according to the process of FIG. 1.
FIG. 3 is a diagrammatic cross-sectional view of a non-oriented three layer film having at least one moisture barrier layer.
FIG. 4 is a diagrammatic cross-sectional view of a non-oriented five layer film having at least one moisture barrier layer.
FIG. 5 is a diagrammatic cross-sectional view of a non-oriented nine layer film having at least one moisture barrier layer.
FIG. 6 is a diagrammatic cross-sectional view of a non-oriented thirteen layer film having at least one moisture barrier layer.

### DETAILED DESCRIPTION OF THE INVENTION

As used throughout this application, the term "sheet" refers to a plastic web of any thickness and is not limited to a plastic web having a thickness of greater than about 254 micron (10 mil). The term "film" means a plastic web of any thickness and is not limited to a plastic web having a thickness of less than about 254 micron (10 mil). For convenience, this application may refer to a sheet having a thickness greater than or including a film; but the terms are not limited to such interpretation.

As used throughout this application, the term "about" refers to approximately, rounded up or down to, reasonably close to, in the vicinity of, or the like. The term "approximate" is synonymous with the term "about."

As used throughout this application, the term "multilayer" refers to a plurality of layers in a single film structure generally in the form of a sheet or web which can be made from a polymeric material or a non-polymeric material bonded together by any conventional means known in the art (i.e., coextrusion, lamination, coating or a combination of such).

As used throughout this application, the term "polystyrene" or "PS" refers to a homopolymer or copolymer having at least one styrene monomer linkage (such as benzene (i.e., C₆H₅) having an ethylene substituent) within the repeating backbone of the polymer. The styrene linkage can be represented by the general formula: [CH₂-CH₂ (C₆H₅)]ₙ. Polystyrene may be formed by any method known to those skilled in the art.

As used throughout this application, the term "coextruded" refers to the process of extruding two or more polymer materials through a single die with two or more orifices arranged so that the extrudates merge and weld together into a laminar structure before chilling (i.e., quenching.) Coextrusion methods known to a person of ordinary skill in the art include but are not limited to blown film coextrusion, slot cast coextrusion and extrusion coating. The flat die or slot cast process includes extruding polymer streams through a flat or slot die onto a chilled roll and subsequently winding the film onto a core to form a roll of film for further processing.

As used throughout this application, the term "blown film" refers to a film produced by the blown coextrusion process. In the blown coextrusion process, streams of melt-plastified polymers are forced through an annular die having a central mandrel to form a tubular extrudate. The tubular extrudate may be expanded to a desired wall thickness by a volume of fluid (e.g., air or other gas) entering the hollow interior of the extrudate via the mandrel, and then rapidly cooled or quenched by any of various methods known to those of skill in the art.

As used throughout this application, the term "layer" refers to a discrete film or sheet component which is coextensive with the film or sheet and has a substantially uniform composition. In a monolayer film, "film," "sheet" and "layer" would be synonymous.

As used throughout this application, the term "barrier" refers to any material which controls a permeable element of the film or sheet and includes but is not limited to oxygen barrier, moisture barrier, chemical barrier, heat barrier and odor barrier.

As used throughout this application, the term "tie material" refers to a polymeric material serving a primary purpose or function of adhering two surfaces to one another, presumably the planar surfaces of two film layers. A tie material adheres one film layer surface to another film layer surface or one area of a film layer surface to another area of the same film layer surface. The tie material may comprise any polymer, copolymer or blend of polymers having a polar group or any other polymer, homopolymer, copolymer or blend of polymers, including modified and unmodified polymers (such as grafted copolymers), which provide sufficient interlayer adhesion to adjacent layers comprising otherwise nonadhering polymers.

As used throughout this application, the term "polyester" refers to a homopolymer or copolymer having an ester linkage between monomer units which may be formed, for example, by condensation polymerization reactions between a dicarboxylic acid and a diol. The ester linkage can be represented by the general formula: [O-R-OC(O)-R'-C(O)]ₙ where R and R' are the same or different alkyl (or aryl) group and may be generally formed from the polymerization of dicarboxylic acid and diol monomers containing both carboxylic acid and hydroxyl moieties. The dicarboxylic acid (including the carboxylic acid moieties) may be linear or aliphatic (e.g., lactic acid, oxalic acid, maleic acid, succinic acid, glutaric acid, adipic acid, pimelic acid, suberic acid, azelaic acid, sebacic acid, and the like) or may be aromatic or alkyl substituted aromatic (e.g., various isomers of phthalic acid, such as paraphthalic acid (or terephthalic acid), isophthalic acid and naphthalic acid). Specific examples of a useful diol include but are not limited to ethylene glycol, propylene glycol, trimethylene glycol, 1,4-butane diol, neopentyl glycol, cyclohexane diol and the like. Polyesters may include a homopolymer or copolymer of alkyl-aromatic esters including but not limited to polyethylene terephthalate (PET), amorphous polyethylene terephthalate (APET), crystalline polyethylene terephthalate (CPET), glycol-modified polyethylene terephthalate (PETG) and polybutylene terephthalate; a copolymer of terephthalate and isophthalate including but not limited to polyethylene terephthalate/isophthalate copolymer; a homopolymer or copolymer of aliphatic esters including but not limited to polylactic acid (PLA); polyhydroxyalkonates including but not limited to polyhydroxypropionate, poly(3-hydroxybutyrate) (PH3B), poly(3-hydroxyvalerate) (PH3V), poly(4-hydroxybutyrate) (PH4B), poly(4-hydroxyvalerate) (PH4V), poly(5-hydroxyvalerate) (PH5V), poly(6-hydroxydodecanoate) (PH6D); and blends of any of these materials.

As used throughout this application, the term "polyethylene" or "PE" refers (unless indicated otherwise) to ethylene homopolymers as well as copolymers of ethylene with at least one alpha-olefin. The term will be used without regard to the presence or absence of substituent branch groups.

As used throughout this application, the term "high density polyethylene" or "HDPE" includes but is not limited to both (a) homopolymers of ethylene which have densities from about 0.960 g/cm³ to about 0.970 g/cm³ and (b) copolymers of ethylene and an alpha-olefin (usually 1-butene or 1-hexene) which have densities from about 0.940 g/cm³ to about 0.958 g/cm³. HDPE includes polymers made with Ziegler or Phillips type catalysts and polymers made with single-site metallocene catalysts. HDPE also includes high molecular weight "polyethylenes." In contrast to HDPE, whose polymer chain has some branching, are "ultra high molecular weight polyethylenes," which are essentially unbranched specialty polymers having a much higher molecular weight than the high molecular weight HDPE.

As used throughout this application, the term "low density polyethylene" or "LDPE" refers to branched homopolymers having densities between 0.915 g/cm³ and 0.930 g/cm³, as well as copolymers containing polar groups resulting from copolymerization (such as with vinyl acetate or ethyl acrylate). LDPE typically contains long branches off the main chain (often termed "backbone") with alkyl substituents of two to eight carbon atoms.

As used throughout this application, the term "copolymer" refers to a polymer product obtained by the polymerization reaction or copolymerization of at least two monomer species. Copolymers may also be referred to as bipolymers. The term "copolymer" is also inclusive of the polymerization reaction of three, four or more monomer species having reaction products referred to terpolymers, quaterpolymers, etc.

As used throughout this application, the term "copolymer of ethylene and at least one alpha-olefin" refers to a modified or unmodified copolymer produced by the co-polymerization of ethylene and any one or more alpha-olefins. Suitable alpha-olefins include, for example, C₃ to C₂₀ alpha-olefins such as propene, 1-butene, 1-pentene, 1-hexene, 1-octene, 1-decene and combinations of such. The co-polymerization of ethylene and an alpha-olefin may be produced by heterogeneous catalysis, such as co-polymerization reactions with Ziegler-Natta catalysis systems, including, for example, metal halides activated by an organometallic catalyst (e.g., titanium chloride) and optionally containing magnesium chloride complexed to trialkyl aluminum. Heterogeneous catalyzed copolymers of ethylene and an alpha-olefin may include linear low density polyethylene (LLDPE), very low density polyethylene (VLDPE) and ultra low density polyethylene (ULDPE) (commercially available as, for example, Dowlex™ from The Dow Chemical Company (Midland, Michigan)). Additionally, the co-polymerization of ethylene and an alpha-olefin may also be produced by homogeneous catalysis, such as co-polymerization reactions with metallocene catalysis systems which include constrained geometry catalysts, (e.g., monocyclopentadienyl transition-metal complexes). Homogeneous catalyzed copolymers of ethylene and alpha-olefin may include modified or unmodified ethylene alpha-olefin copolymers having a long-chain branched (i.e., 8-20 pendant carbons atoms) alpha-olefin co-monomer (commercially available as, for example, Affinity™ and Attane™ from The Dow Chemical Company (Midland, Michigan)), linear copolymers (commercially available as, for example, Tafmer™ from the Mitsui Petrochemical Corporation (Tokyo, Japan)), and modified or unmodified ethylene alpha-olefin copolymers having a short-chain branched (i.e., 3-6 pendant carbons atoms) alpha-olefin co-monomer (commercially available as, for example, Exact™ from ExxonMobil Chemical Company (Houston, Texas)). In general, homogeneous catalyzed ethylene alpha-olefin copolymers may be characterized by one or more methods known to those of skill in the art, including but not limited to molecular weight distribution (M_{w}/Mₙ), composition distribution breadth index (CDBI), narrow melting point range and single melting point behavior.

As used throughout this application, the term "modified" refers to a chemical derivative, such as one having any form of anhydride functionality (e.g., anhydride of maleic acid, crotonic acid, citraconic acid, itaconic acid, fumaric acid, etc.), whether grafted onto a polymer, copolymerized with a polymer or blended with one or more polymers. The term is also inclusive of derivatives of such functionalities, such as acids, esters and metal salts derived from such.

As used throughout this application, the term "nucleating agent" refers to an additive which forms nuclei in a polymer melt to promote the growth of crystals.

As used throughout this application, the term "hydrocarbon resin" refers to a product produced by polymerization from coal tar, petroleum and turpentine feedstocks, as defined by ISO Standard 472, "Plastics - Vocabulary."

As used throughout this application, the term "intermediate layer" refers to a layer that is positioned between two other layers.

As used throughout this application, the term "ethylene vinyl alcohol copolymer" or "EVOH" refers to copolymers comprised of repeating units of ethylene and vinyl alcohol. Ethylene vinyl alcohol copolymers can be represented by the general formula: [(CH₂-CH₂)ₘ-(CH₂-CH(OH))]ₙ. Ethylene vinyl alcohol copolymers may include saponified or hydrolyzed ethylene vinyl acrylate copolymers. EVOH refers to a vinyl alcohol copolymer having an ethylene co-monomer and prepared by, for example, hydrolysis of vinyl acrylate copolymers or by chemical reactions with vinyl alcohol. The degree of hydrolysis is preferably at least 50% and, more preferably, at least 85%. Preferably, ethylene vinyl alcohol copolymers comprise from about 28 mole percent to about 48 mole percent ethylene, more preferably, from about 32 mole percent to about 44 mole percent ethylene, and, even more preferably, from about 38 mole percent to about 44 mole percent ethylene.

As used throughout this application, the term "polyamide" or "PA" or "nylon" refers to a homopolymer or copolymer having an amide linkage between monomer units which may be formed by any method known to those skilled in the art. The amide linkage can be represented by the general formula: [C(O)-R-C(O)-NH-R'-NH]ₙ where R and R' are the same or different alkyl (or aryl) group. Examples of nylon polymers include but are not limited to nylon 6 (polycaprolactam), nylon 11 (polyundecanolactam), nylon 12 (polyauryllactam), nylon 4,2 (polytetramethylene ethylenediamide), nylon 4,6 (polytetramethylene adipamide), nylon 6,6 (polyhexamethylene adipamide), nylon 6,9 (polyhexamethylene azelamide), nylon 6,10 (polyhexamethylene sebacamide), nylon 6,12 (polyhexamethylene dodecanediamide), nylon 7,7 (polyheptamethylene pimelamide), nylon 8,8 (polyoctamethylene suberamide), nylon 9,9 (polynonamethylene azelaiamide), nylon 10,9 (polydecamethylene azelamide), and nylon 12,12 (polydodecamethylene dodecanediamide). Examples of nylon copolymers include but are not limited to nylon 6,6/6 copolymer (polyhexamethylene adipamide/caprolactam copolymer), nylon 6,6/9 copolymer (polyhexamethylene adipamide/azelaiamide copolymer), nylon 6/6,6 copolymer (polycaprolactam/hexamethylene adipamide copolymer), nylon 6,2/6,2 copolymer (polyhexamethylene ethylenediamide/hexamethylene ethylenediamide copolymer), and nylon 6,6/6,9/6 copolymer (polyhexamethylene adipamide/hexamethylene azelaiamide/caprolactam copolymer). Examples of aromatic nylon polymers include but are not limited to nylon 4,1, nylon 6,I, nylon 6,6/6I copolymer, nylon 6,6/6T copolymer, nylon MXD6 (poly-m-xylylene adipamide), poly-p-xylylene adipamide, nylon 6I/6T copolymer, nylon 6T/6I copolymer, nylon MXDI, nylon 6/MXDT/I copolymer, nylon 6T (polyhexamethylene terephthalamide), nylon 12T (polydodecamethylene terephthalamide), nylon 66T, and nylon 6-3-T (poly(trimethyl hexamethylene terephthalamide).

As used throughout this application, the term "ionomer" refers to a partially neutralized acid copolymer.

As used throughout this application, the term "polypropylene" or "PP" refers to a homopolymer or copolymer having at least one propylene monomer linkage within the repeating backbone of the polymer. The propylene linkage can be represented by the general formula: [CH₂-CH(CH₃)]ₙ.

As used throughout this application, the term "palindromic film" refers to a multilayer film, the layers of which are substantially symmetrical. Examples of palindromic films are film or sheet having the layer configurations A/B/A or A/B/B/A or A/B/C/B/A or A/B/C/D/E/D/C/F/C/D/E/D/C/B/A, etc. An example of a layer configuration of a non-palindromic film would be A/B/C/A.

As used throughout this application, the term "thermoformed" refers to polymer film or sheet permanently formed into a desired shape by the application of a differential pressure between the film or sheet and a mold, by the application of heat, by the combination of heat and the application of a differential pressure between the film or sheet and a mold, or by any thermoforming technique known to those skilled in the art

As used throughout this application, the term "thermoplastic" refers to a polymer or polymer mixture that softens when exposed to heat and then returns to its original condition when cooled to room temperature. In general, thermoplastic materials may include natural or synthetic polymers. Thermoplastic materials may further include any polymer that is cross-linked by either radiation or chemical reaction during manufacturing or post-manufacturing processes.

As used throughout this application, the term "polymer" refers to a material which is the product of a polymerization or copolymerization reaction of natural, synthetic or combined natural and synthetic monomers and/or co-monomers and is inclusive of homopolymers, copolymers, terpolymers, etc. In general, the layers described in the present application may comprise a single polymer, a mixture of a single polymer and non-polymeric material, a combination of two or more polymers blended together, or a mixture of a blend of two or more polymers and non-polymeric material. It will be noted that many polymers may be synthesized by the mutual reaction of complementary monomers. It will also be noted that some polymers are obtained by the chemical modification of other polymers such that the structure of the macromolecules that constitute the resulting polymer can be thought of as having been formed by the homopolymerization of a hypothetical monomer.

Styrene block copolymers (SBC) include styrene butadiene copolymers (SB). The styrene-butadiene copolymers that are suitable for packaging applications are those resinous block copolymers that typically contain a greater proportion of styrene than butadiene and that are predominantly polymodal with respect to molecular weight distribution. (See Hartsock, "Styrene-Butadiene Copolymers," The Wiley Encyclopedia of Packaging Technology, Second Edition, 1997, pp. 863-864 (John Wiley & Sons, Inc., New York, New York). A non-limiting example of SB is DK13 K-Resin® Styrene-Butadiene Copolymer, which is available from Chevron Phillips Chemical Company (The Woodlands, Texas).

Examples of processing aids include but are not limited to slip/antiblock concentrates, such as SKR 17 available from Chevron Phillips Corporation (The Woodlands, Texas); release agents, such as SF18-350 Polydimethylsiloxane Fluid available from DC Products Pty Ltd (Mt. Waverley, Victoria, Australia); and slip agents, such as IncroMax™ PS available from Croda Polymer Additives (Cowick, United Kingdom). Tie material includes but is not limited to glycidyl methacrylate-modified copolymers of ethylene (e.g., epoxy-functional tie materials), anhydride-modified (such as maleic anhydride modified) copolymers of ethylene, copolymers of ethylene and a carboxylic acid (such as an acrylic acid), copolymers of ethylene and an ester (such as an acrylate), and blends of such. Further examples of tie material are provided below.

Examples of copolymers of ethylene and an ester include but are not limited to ethylene vinyl acetate copolymer (EVA). Non-limiting examples of EVA are described below.

Examples of copolymers of ethylene and at least one alpha olefin include but are not limited to linear low density polyethylene and plastomers. Specific non-limiting examples of such ethylene copolymers are Dowlex™ 2045 Polyethylene Resin available from The Dow Chemical Company (Midland, Michigan) and Exact™ Plastomers (various grades) available from ExxonMobil Chemical Company (Houston, Texas). Copolymers of ethylene and at least one alpha olefin are further described below.

Examples of processing aids include but are not limited to slip/antiblock concentrates, such as SKR 17 available from Chevron Phillips Corporation (The Woodlands, Texas); and thermal stabilizers, such as SKR 20 available from Chevron Phillips Corporation (The Woodlands, Texas).

Examples of high density polyethylene (HDPE) include but are not limited to HDPE as described below.

Examples of copolymers of ethylene and at least one alpha-olefin include but are not limited to butene LLDPE, such as ExxonMobil™ LLDPE LL1001.32 available from ExxonMobil Chemical Company (Houston, Texas); Dow LLDPE DFDA-7047 NT 7 available from the Dow Chemical Company (Midland, Michigan); Novapol® PF-0118-F available from Nova Chemicals Corporation (Calgary, Alberta, Canada); Sabic® LLDPE 118N available from Sabic Europe (Sittard, The Netherlands); and Exact™ Plastomers available from ExxonMobil Chemical Corporation (Houston, Texas).

Examples of copolymers of ethylene and an ester include but are not limited to ethylene vinyl acetate copolymer (EVA), ethylene methyl methacrylate copolymer, ethylene ethyl methacrylate copolymer and ethylene alkyl acrylates such as ethylene methyl acrylate, ethylene ethyl acrylate and ethylene butyl acrylate. Non-limiting examples of EVA include Escorene™ Ultra LD 705.MJ available from ExxonMobil Chemical Company (Houston, Texas), Escorene™ Ultra LD 768.MJ available from ExxonMobil Chemical Company (Houston, Texas) and Ateva® 2861AU available from Celanese Corporation (Edmonton, Alberta, Canada).

Examples of anhydride-modified copolymers of ethylene include are but not limited to tie materials as described above and below.

A non-limiting example of ionomers (i.e., partially neutralized acid copolymers) is Surlyn® available from E. I. du Pont de Nemours and Company (Wilmington, Delaware).

Examples of processing aids include but are not limited to antiblock additives, such as Ampacet® 10853 available from Ampacet Corporation (Tarrytown, New York).

HDPE may be further described as a semicrystalline polymer. It may be a homopolymer when the density is ≥ 0.960 g/cm³ and a copolymer when the density is below this value. HDPE is available in a wide range of molecular weights as determined by either melt index (MI) or HLMI (high-load melt index). (See Carter, "Polyethylene, High-Density," The Wiley Encyclopedia of Packaging Technology, Second Edition, 1997, pp. 745-748 (John Wiley & Sons, Inc., New York, New York). Specific non-limiting examples of HDPE include Alathon® M6020 available from Equistar Chemicals LP (Houston, Texas); Alathon® L5885 available from Equistar Chemicals LP (Houston, Texas); ExxonMobil™ HDPE HD 7925.30 available from ExxonMobil Chemical Company (Houston, Texas); ExxonMobil™ HDPE HD 7845.30 available from ExxonMobil Chemical Company (Houston, Texas); and Surpass® HPs167-AB available from Nova Chemicals Corporation (Calgary, Alberta, Canada

As described above, tie material includes but is not limited to glycidyl methacrylate-modified copolymers of ethylene (e.g., epoxy-functional tie materials), anhydride-modified (such as maleic anhydride modified) copolymers of ethylene, copolymers of ethylene and a carboxylic acid (such as an acrylic acid), copolymers of ethylene and an ester (such as an acrylate), and blends of such. Specific non-limiting examples of tie material include Lotader® AX 8900 available from Arkema Inc. (Philadelphia, Pennsylvania); GT4157 available from Westlake Chemical Corporation (Houston, Texas); DuPont™ Bynel® 41E710 available from E.I. du Pont de Nemours and Company, Inc. (Wilmington, Delaware); DuPont™ Bynel® 41 E687 available from E.I. du Pont de Nemours and Company, Inc. (Wilmington, Delaware); Plexar® PX 3084 available from Equistar Chemicals LP (Houston, Texas); Admer™ AT2118A available from Mitsui Chemicals America, Inc. (Rye Brook, New York); DuPont™ Bynel® 40E529 available from E.I. du Pont de Nemours and Company, Inc. (Wilmington, Delaware); DuPont™ Bynel® 4164 available from E.I. du Pont de Nemours and Company, Inc. (Wilmington, Delaware); Plexar® PX 3080 available from Equistar Chemicals LP (Houston, Texas); and Lotader® 2210 available from Arkema Inc. (Philadelphia, Pennsylvania).

The HDPE may have a medium molecular weight, a melt index within the range of about 0.5 to about 50 dg/min, a density greater than or equal to about 0.941 g/cm³, a long chain branching index or less than or equal to about 0.5 and a melt flow ratio less than or equal to about 65. (See US Patent Application 2007/0036960, published February 15, 2007.

A nucleating agent may comprise any of those nucleating agents disclosed in US Patent 6,969,556, issued November 29, 2005. More specifically, as a non-limiting example, the nucleating agent may comprise glycerol alkoxide salts, hexahydrophthalic acid salts, similar salts or mixtures of such salts, as disclosed in US Patent Application 2008/0227900, published September 18, 2008, and in US Patent Application 2007/0036960, published February 15, 2007. Such salts include ammonium and metal salts, including but not limited to zinc, magnesium, calcium and mixtures of such metals. An example of a zinc glycerolate nucleating agent is Irgastab® 287 available from Ciba Specialty Chemicals Holding, Inc. (Basel, Switzerland). An example of a calcium hexahydrophthalate is Hyperform® HPN-20E available from Milliken & Company (Spartanburg, South Carolina). Calcium hexahydrophthalate is also available blended with LDPE as Polybatch® CLR122 available from A. Schulman Inc. (Akron, Ohio). The nucleating agent may be included in barrier layer (or layers) in an amount from about 0.001 % to about 1 % by weight (of the layer), from about 0.002 % to about 0.2 % by weight, from about 0.02 % to about 0.12 % by weight, or from about 0.04 % to about 0.10%.

A hydrocarbon resin may comprise any of those hydrocarbon resins disclosed in US Patent 6,432,496, issued August 13, 2002, or in US Patent Application 2008/0286547, published November 20, 2008. More specifically, as a non-limiting example, the hydrocarbon resin may include petroleum resins, terpene resins, styrene resins, cyclopentadiene resins, saturated alicyclic resins or mixtures of such resins. Additionally, as a non-limiting example, the hydrocarbon resin may comprise hydrocarbon resin derived from the polymerization of olefin feeds rich in dicyclopentadiene (DCPD), from the polymerization of olefin feeds produced in the petroleum cracking process (such as crude C₉ feed streams), from the polymerization of pure monomers (such as styrene, α-methylstyrene, 4-methylstyrene, vinyltoluene or any combination of these or similar pure monomer feedstocks), from the polymerization of terpene olefins (such as α-pinene, β-pinene or d-limonene) or from a combination of such. The hydrocarbon resin may be fully or partially hydrogenated. Specific examples of hydrocarbon resins include but are not limited to Plastolyn® R1140 Hydrocarbon Resin available from Eastman Chemical Company (Kingsport, Tennessee), Regalite® T1140 available from Eastman Chemical Company (Kingsport, Tennessee), Arkon® P-140 available from Arakawa Chemical Industries, Limited (Osaka, Japan) and Piccolyte® S135 Polyterpene Resins available from Hercules Incorporated (Wilmington, Delaware). The hydrocarbon resin may be included in barrier component layer (or layers) in an amount from about 5 % to about 30 % by weight (of the layer), from about 5 % to about 20 % by weight, from about 10 % to about 20 % by weight, or from about 10 % to about 15 % by weight.

Copolymers of ethylene and an ester are as described above. As described above, a non-limiting example of a copolymer of ethylene and an ester is EVA. As described above, one non-limiting example of EVA is Escorene™ Ultra LD 705.MJ available from ExxonMobil Chemical Company (Houston, Texas).

Polyamide (which is further described above) may be included for clarity, thermoformability, high strength and toughness over a broad temperature range, chemical resistance and/or barrier properties. (See "Nylon," The Wiley Encyclopedia of Packaging Technology, Second Edition, 1997, pp. 681-686 (John Wiley & Sons, Inc., New York, New York). Specific, non-limiting examples of polyamide include UBE Nylon 5033 B available from UBE Engineering Plastics, S.A. (Castellón, Spain); Ultramid® C40 L 01 available from BASF Corporation (Florham Park, New Jersey); Ultramid® C33 01 available from BASF Corporation (Florham Park, New Jersey); and a blend of 85 % by weight (of the blend) of Ultramid® B36 available from BASF Corporation (Florham Park, New Jersey) and 15 % by weight of DuPont™ Selar® PA3426 available from E.I. du Pont de Nemours and Company, Inc. (Wilmington, Delaware).

In an embodiment, the oxygen barrier material may be split (i.e., in non-adjacent layers) as a result of the seven-layer tubular extrudate being collapsed and flattened upon itself to form two inner tubular extrudate layers and thermally laminated to itself at the two inner tubular extrudate layers. Examples of oxygen barrier materials include but are not limited to EVOH, polyamide, polyglycolic acid and acrylonitrile-methyl acrylate copolymer.

EVOH is as described above. Specific non-limiting examples of EVOH include EVAL™ H171 available from EVAL Company of America (Houston, Texas); Evasin EV-3801V available from Chang Chun Petrochemical Co., Ltd. (Taipei, Taiwan); and Soarnol® ET3803 available from Soarus L.L.C. (Arlington Heights, Illinois).

Polyamide is as described above. Specific non-limiting examples of polyamide include Nylon MXD6® (various grades) available from Mitsubishi Gas Chemical Company, Inc. (Tokyo, Japan); and a blend of 85 % by weight (of the blend) of Ultramid® B36 available from BASF Corporation (Florham Park, New Jersey) and 15 % by weight of DuPont™ Selar® PA3426 available from E.I. du Pont de Nemours and Company, Inc. (Wilmington, Delaware).

Polyglycolic acid (PGA) (or polyglycolide) is a biodegradable, thermoplastic polymer and the simplest linear, aliphatic polyester. It offers high gas barrier to carbon dioxide and oxygen, controllable hydrolysis and excellent mechanical strength.

Acrylonitrile-methyl acrylate copolymer imparts high barrier to gases (such as oxygen), aromas and fragrances as well as chemical resistance and inertness. A specific non-limiting example of acrylonitrile-methyl acrylate copolymer is Barex® (various grades) available from Ineos Olefins & Polymers USA (League City, Texas).

In an embodiment, a non-oriented film comprises at least one moisture barrier layer comprising a blend. The blend comprises high density polyethylene, hydrocarbon resin and nucleating agent.

The blend comprises from about 69 % by weight to about 90 % by weight high density polyethylene or from about 72 % by weight to about 88 % by weight high density polyethylene or from about 75 % by weight to about 85 % by weight high density polyethylene. It is important that the high density polyethylene has a melt index of at least 1.0 g/10 min and a density greater than 0.958 g/cc. High density polyethylenes which do not satisfy these requirements afford poor results. An example of a high density polyethylene which has a melt index of at least 1.0 g/10 min and a density greater than 0.958 g/cc is Alathon® M6020 (Equistar Chemicals, LP, Houston, Texas). Other high density polyethylenes such as Alathon® L5485 (Lyondell Chemical Company, Houston, Texas), ExxonMobil™ HDPE HD 7845.30 (ExxonMobil Chemical Company, Houston, Texas) and Alathon® L5885 (Lyondell Chemical Company, Houston, Texas) do not have the required density and/or melt index and are not preferred for the blend of the moisture barrier layer of the non-oriented film of the present application.

The blend further comprises a hydrocarbon resin as described above. The blend comprises from about 5 % by weight to about 30 % by weight hydrocarbon resin or from about 5 % by weight to about 20 % by weight hydrocarbon resin or from about 10 % by weight to about 20 % by weight hydrocarbon resin or from about 10 % by weight to about 15 % by weight hydrocarbon resin.

The blend of the non-oriented film further comprises a nucleating agent as described above. The blend comprises from about 0.01 % by weight to about 1 % by weight nucleating agent or from about 0.04 % by weight to about 0.10 % by weight nucleating agent. The nucleating agent may be a glycerol alkoxide salt, a hexahydrophthalic acid salt, zinc glycerolate salts or calcium hexahydrophthalate.

The non-oriented film may, in some aspects, comprise an oxygen barrier material as described above. When the non-oriented film comprises an oxygen barrier material, the film has a normalized oxygen transmission rate of less than about 59,100 cc-micron/m²/day (150 cc-mil/100 in²/day) or less than about 39,400 cc-micron/m²/day (100 cc-mil/100 in²/day).

The non-oriented film may have a thickness of less than 76.2 micron (3.00 mil), preferably less than 43.2 micron (1.70 mil).

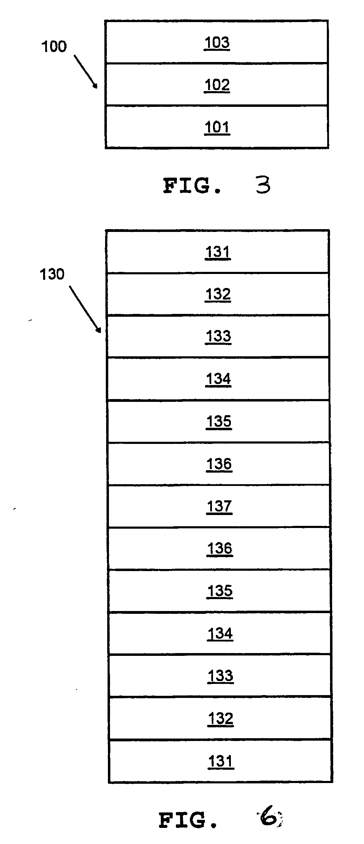

Referring to FIG. 3, non-oriented film 100 may be a three-layer film comprising a moisture barrier layer. The moisture barrier layer comprises a blend comprising a high density polyethylene, wherein the high density polyethylene has a melt index of at least 1.0 g/10 min and a density greater than 0.958 g/cm³, a hydrocarbon resin and a nucleating agent.

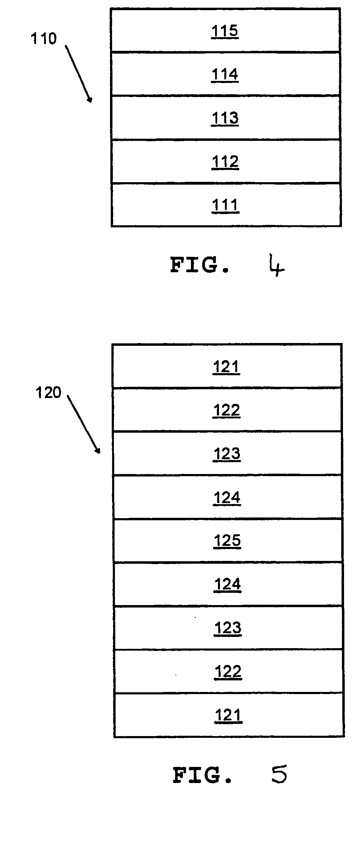

With reference to FIG. 3, a generic non-oriented film may comprise the moisture barrier layer in any of the three layers 101, 102 or 103 of the multilayer film. For example, the moisture barrier layer may be middle layer 102 or, alternatively, outer layer 101 or inner layer 103. The non-oriented film may be a three-layer, four-layer, five-layer, seven-layer, nine-layer, thirteen-layer or any other multilayer film (i.e., film having two or more layers), provided that the non-oriented film has a normalized moisture vapor transmission rate of no greater than 118 g-micron/m²/day (0.30 g-mil/100 in²/day) measured at about 37.8 °C (100 °F) and 90 % external relative humidity (as further defined and described in the EXAMPLES below). Embodiments of a non-oriented film comprising a five-layer film, a nine-layer film and a thirteen-layer film are shown in FIGS. 4, 5 and 6, respectively. The non-oriented film may be a blown, coextruded film.

The non-oriented film may comprise layers other than the moisture barrier layer. For example, the film may comprise at least one layer comprising an ionomer, at least one layer comprising a high density polyethylene, at least one layer comprising a polyester, at least one layer comprising a styrene butadiene copolymer, or combinations of the above. In some aspects, the film comprises a layer comprising high density polyethylene in addition to the moisture barrier layer. In other aspects, the film comprises the moisture barrier layer and a sealant layer coated with PET.

FIG. 4 is a diagrammatic cross-sectional view of a second alternate embodiment of non-oriented film 110, as described in the present application. Any of the five layers 111, 112, 113, 114, and 115 may comprise the moisture barrier layer comprising a HDPE, a hydrocarbon resin and nucleating agent. In some aspects, more than one layer may comprise the moisture barrier layer. For example, layers 115 and 113 may comprise the barrier layer. One example of a five-layer film is layer 115 as a 20.3 micron (0.8 mil) thick layer with a blend of HPDE, nucleating agent and hydrocarbon resin, layer 114 as a 20.3 micron (0.8 mil) thick layer with a blend of LLDPE, LDPE and nucleating agent, layer 113 as a 5.1 micron (0.2 mil) thick layer with a blend of HDPE, nucleating agent and hydrocarbon resin, layer 112 as a 2.5 micron (0.1 mil) thick layer with a blend of EVA and polybutylene and layer 111 as a 2.5 micron (0.1 mil) thick layer with EVA.

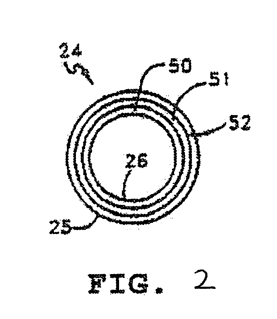

FIG. 5 is a diagrammatic cross-sectional view of a third alternate embodiment of the non-oriented film described in the present application. The multilayer film 120 is shown as a nine-layer palindromic film, resulting from a blown, coextruded five-layer tubular extrudate that is collapsed and flattened upon itself to form two inner tubular extrudate layers 50 (see FIG. 2) and that is thermally laminated to itself at the two inner tubular extrudate layers 50 to form one inner layer 125.

FIG 6 is a diagrammatic cross-sectional view of a fourth alternate embodiment of the non-oriented film described in the present application. The multilayer film 130 is shown as a thirteen-layer palindromic film, resulting from a blown, coextruded seven-layer tubular extrudate that is collapsed and flattened upon itself to form two inner tubular extrudate layers 50 (see FIG. 2) and that is thermally laminated to itself at the two inner tubular extrudate layers 50 to form one inner layer 137. The multilayer film comprises at least one moisture barrier layer and may optionally comprise more than one moisture barrier layer. As described above, the moisture barrier layer comprises HDPE, hydrocarbon resin and nucleating agent. In some aspects, moisture barrier layers comprising a HDPE, a hydrocarbon resin and a nucleating agent may be used for layers 132, 134, and 136. In other aspects, a moisture barrier layer comprising a HDPE, a hydrocarbon resin and a nucleating agent may be used for layer 136.

The non-oriented film, as embodied in film 100, 110, 120, 130 or otherwise, may be included in a package for a product. In one embodiment, the package comprising the non-oriented film described in this application may be a thermoformed package resulting from the non-oriented film having been thermoformed.

A description of "thermoformed" is provided above. Furthermore, thermoforming and other similar techniques are well known in the art for packaging. (See Throne, "Thermoforming," Encyclopedia of Polymer Science and Technology, Third Edition, 2003, Volume 8, pp. 222-251 (John Wiley & Sons, Inc., Hoboken, New Jersey); see also Irwin, "Thermoforming," Modern Plastics Encyclopedia, 1984-1985, pp. 329-336 (McGraw-Hill, Inc., New York, New York); see also "Thermoforming," The Wiley Encyclopedia of Packaging Technology, Second Edition, 1997, pp. 914-921 (John Wiley & Sons, Inc., New York, New York).) Suitable thermoforming methods include standard, deep-draw or plug-assist vacuum forming. During standard vacuum forming, a thermoplastic web, such as a film or sheet, is heated and a vacuum is applied beneath the web allowing atmospheric pressure to force the web into a preformed mold. When relatively deep molds are employed, the process is referred to as a "deep-draw" application. In a plug-assist vacuum forming method, after the thermoplastic web has been heated and sealed across a mold cavity, a plug shape similar to the mold shape impinges on the thermoplastic web and, upon the application of vacuum, the thermoplastic web conforms to the mold surface.

The thermoformed package comprising the non-oriented film described in the present application may be a cup, a tub, a bucket, a tray or a myriad of other items. Furthermore, the product contained in the thermoformed package may be a food, non-food, medical and/or industrial product. Examples of such products include but are not limited to syrups (including but not limited to breakfast syrup, cough syrup, etc.), creams, cheeses, condiments (including but not limited to salad dressings, jellies, jams, ketchup, etc.), personal care items (including but not limited to shampoos, hand creams, mouthwashes, toothpastes, antacids, etc.), medications, liquid detergents, oils, pates, pet foods, glues, beverages (including alcoholic and non-alcoholic) and confections (including but not limited to hard sweets, fudge, toffee, licorice, chocolate, jelly candies, marshmallow, marzipan, divinity, pastry, chewing gum, ice cream, etc.).

Non-oriented film, as embodied in films 100, 110, 120, 130 or otherwise, may manufactured by various methods. In general, the methods comprise the sequential steps of (a) adding thermoplastic resins to extruders to extrude the various layers of the sheet or film, such as, for example, an outer layer of an n-layer multilayer barrier film, an intermediate layer (which may be but not necessarily is a barrier component of the multilayer barrier film) and an inner layer of the multilayer barrier film, such that the intermediate layer is positioned between the outer layer and the inner layer of the multilayer barrier film and such that the multilayer barrier film has a first surface and an opposing second surface; (b) heating the thermoplastic resins to form streams of melt-plastified polymers; (c) forcing the streams of melt-plastified polymers through a die having a central orifice to form a tubular extrudate having a diameter and a hollow interior; (d) expanding the diameter of the tubular extrudate by a volume of fluid (such as a volume of gas) entering the hollow interior via the central orifice; (e) collapsing the tubular extrudate; (f) flattening the tubular extrudate to form two inner tubular extrudate layers.

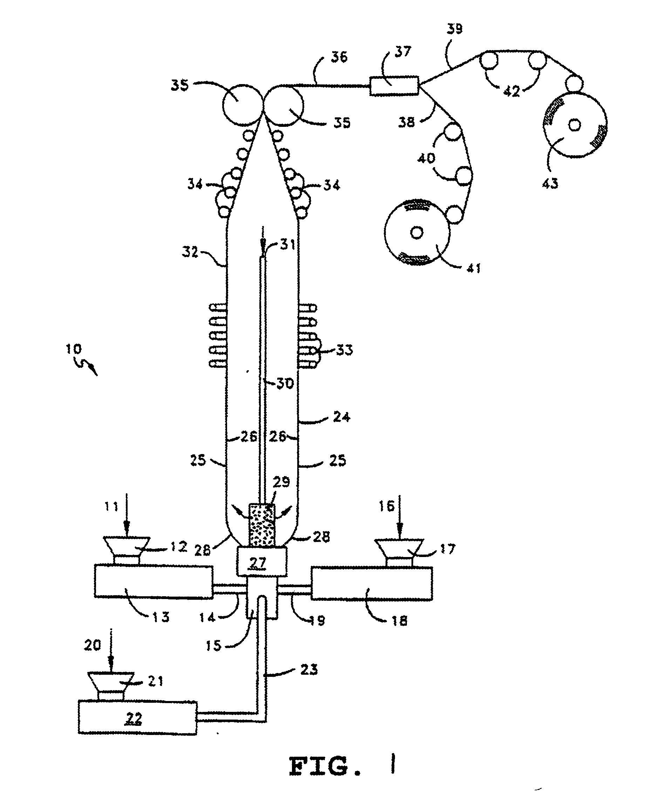

Referring again to the drawings, FIG. 1 is a schematic representation of a blown film process for producing a multilayer film included in the non-oriented film described in the present application. Advantageously, this multilayer blown film may be extruded, blown, cooled, collapsed, etc., using well known and available equipment.

FIG. 1 depicts a schematic view of a typical process 10 for steps (a) - (f) above. In the depicted process 10, first thermoplastic resin 11 for an outer layer of a multilayer barrier film is placed in first hopper 12 of first extruder 13. The extruder 13 is heated to an appropriate temperature above the melting point of the first thermoplastic resin 11 such that first thermoplastic resin 11 is heated to form streams of melt-plastified polymers. Extruder 13 may also be provided with a jacketed chamber through which a cooling medium is circulating. The rotation of a screw within first extruder 13 forces melt-plastified polymer through first connecting pipe 14 through coextrusion die 15.

Simultaneous with the introduction of the melt-plastified first thermoplastic resin 11 to coextrusion die 15, second thermoplastic resin 16 (which has been placed in second hopper 17 of second extruder 18) is similarly heated to form streams of melt-plastified polymers and forced by second extruder 18 through second connecting pipe 19 through coextrusion die 15. Third thermoplastic resin 20 is similarly heated to form streams of melt-plastified polymers and forced by third extruder 22 through third connecting pipe 23 through coextrusion die 15. In other embodiments, additional extruders may be used. For example, five extruders are typically used to produce multilayer film 120 and seven extruders are typically used to produce multilayer film 130. However, in the coextrusion art it is also known that when the same thermoplastic resin is used in more than one layer of a multilayer film, the melt-plastified resin from one extruder may be divided at the die and used for multiple layers. In this way, a five-layer film may be made using three or four extruders.

The coextrusion die 15 has an annular, preferably circular, opening and is designed to bring together the first, second and third melt-plastified thermoplastic resins such that the first, second and third melt-plastified thermoplastic resins are coextruded out of the coextrusion die 15 as tubular extrudate 24. In the art, the term "tubular extrudate" is synonymous with the terms "bubble" and "blown bubble." Coextrusion die 15 is equipped, as is known in the art, with a central orifice through which a fluid, such as a volume of gas, is typically introduced to radially expand the diameter of tubular extrudate 24 forming an expanded tubular extrudate 24 having an exterior surface 25 and interior surface 26.

Tubular extrudate 24 may be externally cooled by cooling means such as air ring 27 which blows cooling air along lower outer surface 28 of tubular extrudate 24. Simultaneously, internal surface 26 may be cooled, such as by contact with refrigerated air (at a temperature of, for example 5 °C -15 °C) delivered through an internal bubble cooling unit having perforated pipe 29. Perforated pipe 29 is concentrically disposed around longer pipe 30 of narrower diameter. Longer pipe 30 is open at distal end 31 to receive and remove warmer air which has risen to upper end 32 of tubular extrudate 24. The streams of external and internal cooling fluids, such as air and/or water, constitute a cooling zone serving to chill or set tubular extrudate 24 at the desired diameter.

Tubular extrudate 24 may be stabilized by external concentric cage 33 to help maintain tubular extrudate 24 along a straight path to a collapsing frame or ladder comprising a series of converging rolls 34. Concentric cage 33 may be particularly useful to stabilize films made using an internal bubble cooling unit.

Tubular extrudate 24 is collapsed in converging rolls 34 and flattened by driven nip rolls 35, which may also assist in collapsing tubular extrude 24. Driven nip rolls 35 function to pull and/or transport tubular extrudate 24 and also to collapse tubular extrudate 24 to form flattened extrudate 26. However, other transport means and collapsing means may be employed and are known in the art; these means include but are not limited to such apparatus as collapsing ladders and drive belts.

Referring now to FIG. 2, a cross-sectional view of tubular extrudate 24, made according to the process of FIG. 1, is shown having exterior surface 25 and interior surface 26. Tubular extrudate 24 has three layers: inner tubular extrudate layer 50, intermediate tubular extrudate layer 51 (which may be but not necessarily is a barrier component extrudate layer) and outer tubular extrudate layer 52. Each extrudate layer may comprise any number of layers. For example, as a barrier component extrudate layer, intermediate tubular extrudate layer 51 may comprise any number of layers, including but not limited to one layer, two layers and five layers.

As tubular extrudate 24 is collapsed and flattened by converging rolls 34 and driven nip rolls 35 to form flattened extrudate 36, two inner tubular extrudate layers 50 are formed. The two inner tubular extrudate layers 50 may thermally laminate to themselves to form one inner layer, resulting in a palindromic multilayer film having a first surface and a second surface. This is achieved if the blown film equipment is operated at a high enough output rate (as determined by a person of ordinary skill in the art without undue experimentation) so that the flattened extrudate 36 is of sufficient temperature for such thermal lamination. If flattened extrudate 36 is laminated to itself, the resulting palindromic, multilayer film is conveyed by rollers (not shown in FIG. 1) to a wind-up reel (not shown in FIG. 1) for further processing.

Alternatively, flattened extrudate 36 may be slit open into one or more sheets which may be wound on paperboard or plastic cores for subsequent dispensing or use. In the embodiment depicted in FIG. 1, flattened extrudate 36 is conveyed through slitter 37 where the flattened extrudate is slit by knives to form a first multilayer film 38 and a second multilayer film 39. First multilayer film 38 is conveyed by first rollers 40 to first wind-up reel 41 for further processing, and second multilayer film 39 is conveyed by second rollers 42 to second wind-up reel 43 for further processing.

In producing a multilayer film included in the or non-oriented film described in the present application, it will be appreciated by those skilled in the art that such parameters as the coextrusion die diameter, nip roll speed, amount and temperature of fluid (e.g., air) introduced and captured between the coextrusion die and nip rolls, flow rate of the tubular extrudate from the coextrusion die, melt temperatures, type of cooling medium (e.g. water or air), and internal and external tubular extrudate cooling temperatures may all be adjusted to optimize process conditions. For example, the circumference or lay-flat width of the tubular extrudate may be increased to varying degrees above that of the coextrusion die diameter by modification of one or more of the above parameters. Similarly, the tubular extrudate may be conditioned or modified, such as by internal and/or external application and variation of the types, amounts and characteristics of materials (including gaseous or liquid fluids contacting the tubular extrudate) as well as by setting and changing such parameters as pressures and temperatures. It will be understood in the art that such parameters may vary and will depend upon practical considerations, such as the particular thermoplastic resins comprising the tubular extrudate, the presence or absence of modifying agents, the equipment used, desired rates of production, desired tubular extrudate size (including diameter and thickness), and the quality and desired performance characteristics of the tubular extrudate. These and other process parameters are expected to be set by one skilled in the art without undue experimentation. Also, certain non-uniformities in processing, including but not limited to variation in film thickness, unequal heating or cooling of the tubular extrudate and non-uniform air flows, may be obviated by rotation with or without oscillation, either alone or in combination, of the coextrusion die, the air ring or other apparatus with respect to the vertical axis of the tubular extrudate. It should also be understood that while manufacture of the tubular extrudate has been described above with respect to a coextrusion process which used vertical upward transport of the tubular extrudate and expanded tubular extrudate, those skilled in the art may extrude and expand the tubular extrudate in other directions including vertically downward.

### EXAMPLES

Examples and Comparative Examples were tested for various properties. In measuring the various properties, the thicknesses of the overall sheet, of the blown film, of the blown film's barrier components and of the sheet's components may be considered.

Properties measured include the properties described below, with a reference to an ASTM Standard Test Method.

Oxygen Transmission Rate (OTR) is a measure of the rate of the transmission of oxygen gas through plastics in the form of film, sheeting, laminates, coextrusions, etc. It is expressed in cc/m²/day (or cm³/100 in²/day) and is measured in accordance with ASTM D3985, "Standard Test Method for Oxygen Gas Transmission Rate Through Plastic Film and Sheeting Using a Coulometric Sensor." For Examples 4a - 7a and Comparative Examples 8a - 9a, the measured value is normalized as per one micron (or mil) of thickness of the film, such that an oxygen transmission rate for a sheet expressed as 30,200 cc-micron/m²/day (76.8 cc-mil/100in²/day) refers to 30,200 cc of oxygen transmitted through one micron of film in a m²-size sheet per day (76.8 cc of oxygen transmitted through one mil of film in a 100in²-size sheet per day). For Examples 4a - 7a and Comparative Examples, 8a - 9a, OTR was measured at 22.8 °C (73°F) and 0 % relative humidity.

Water Vapor Transmission Rate (WVTR) or Moisture Vapor Transmission Rate (MVTR) is a measure of the rate of the transmission of water vapor or moisture through flexible barrier materials. It is expressed in g/m²/day (or g/100in²/day) and is measured in accordance with ASTM F1249, "Standard Test Method for Water Vapor Transmission Rate Through Plastic Film and Sheeting Using a Modulated Infrared Sensor." For Examples 1a - 10a and Comparative Examples 1a - 10a, the measured value is normalized as per one micron (or mil) of thickness of the film, such that a moisture vapor transmission rate for a film expressed as 100 g-micron/m²/day (0.254 g-mil/100 in²/day) refers to 100 g of moisture transmitted through one micron of film in a m²-size sheet per day (0.254 g of moisture transmitted through one mil of film in a 100in²-size sheet per day).

Examples 1a - 10a are non-oriented films also exemplifying the present invention. Comparative Examples 1a - 10a were also produced. Example 1a and Comparative Examples 2a - 5a were extruded as monolayer films on a Labtech Engineering cast extrusion line. Examples 2a - 10a and Comparative Examples 6a - 10a were produced, generally, as follows: A multilayer, blown, coextruded film was produced and thermally laminated to itself at the inner layers. Alternatively, the coextruded film was slit open into one or more films.

TABLE 1 reports the normalized water vapor transmission rate for the monolayer films of Example 1 a and Comparative Examples 1a-4a. The moisture vapor transmission rates for the films of Example 1a and Comparative Examples 1a - 5a were measured at about 100 °C and 90 % external relative humidity. Example 1 a comprises 83 % by weight M6020 HDPE, 15 % by weight hydrocarbon resin and 0.08 % by weight nucleating agent; the normalized moisture vapor transmission rate for this film is 100 g-micron/m²/day (0.254 g-mil/100in²/day). By comparison, Comparative Example 1 a comprises 100 % by weight M6020 HDPE and has a greater normalized moisture vapor transmission rate of 156 g-micronlm²/day (0.396 g-mil/100in²/day). The addition of 0.08 % by weight nucleating agent to M6020 HDPE decreases the normalized moisture vapor transmission rate to 138 g-micron/m²/day (0.351 g-mil/100in²/day) as shown in Comparative Example 2a. The addition of 15 % by weight hydrocarbon resin to M6020 HDPE increases the normalized moisture vapor transmission rate to 171 g-micron/m²/day (0.434 g-mil/100in²/day) as shown in Comparative Example 3a. Thus, the nucleating agent and hydrocarbon resin have opposing effects on the normalized moisture vapor transmission rate. When the nucleating agent and hydrocarbon agent are combined as in Example 1a, a synergistic effect is observed. Example 1a has a lower normalized moisture vapor transmission rate than any of Comparative Examples 1a-3a, including Comparative Example 2a which comprises the nucleating agent. Thus, the effect of adding a nucleating agent and hydrocarbon resin in combination is not predicted based on the results of the nucleating agent and hydrocarbon resin alone and, therefore, is a surprising result.

Comparing Comparative Examples 4a and 5a illustrate that, although a reduction in normalized moisture vapor transmission rate is observed with polypropylene instead of M6020 HDPE, the magnitude of the effect is smaller and therefore does not predict the results illustrated in Example 1 a.

**TABLE 1**

| | Alathon M6020 HDPE (% by weight) | Polypropylene 3270 (% by weight) | Plastolyn R1140 hydrocarbon resin (% by weight) | HPN-20E nucleating agent (% by weight) | LDPE (% by weight) | Thickness (microns) (mils) | MVTR (g/m2/day) (g/100in2/day) | Normalized MVTR (g-micron/m2/day) (g-mil/100in2/day) |
|---|---|---|---|---|---|---|---|---|
| Example 1a | 83 | | 15 | 0.08 | 1.92 | 106 (4.16) | 0.95 (0.061) | 100 (0.254) |
| (Comparative Example 1a | 100 | | | | | 95.0 (3.74) | 1.64 (0.106) | 156 (0.396) |
| Comparative Example 2a | 98 | | | 0.08 | 1.92 | 106 (4.18) | 1.30 (0.084) | 138 (0.351) |
| Comparative Example 3a | 85 | | 15 | | | 103 (4.06) | 1.66 (0.107) | 171 (0.434) |
| Comparative Example 4a | | 100 | | | | 95.6 (3.77) | 2.11 (0.136) | 202 (0.513) |
| Comparative Example 5a | | 83.3 | 14.7 | 0.08 | 1.92 | 84.6 (3.33) | 1.94 (0.125) | 164 (0.416) |

The moisture vapor transmission rates for the films of TABLES 2-6, were measured at about 37.8 °C (100 °F) and 90 % external relative humidity.

TABLE 2 illustrates 44.5 micron (1.75 mil) collapsed blown films with a total thickness of approximately 88.9 micron (3.5 mil) and thirteen layers. In Example 2a and Comparative Example 6a, layers six and eight comprise M6020 HDPE and nucleating agent. Example 2a differs from Comparative Example 6a in that layers six and eight of Example 2a further comprise Piccolyte® S135 hydrocarbon resin. Example 2a has an improved normalized moisture vapor transmission rate of 87 g-micron/m²/day (0.22 g-mil/100in²/day) as compared to Comparative Example 6a which has a normalized moisture vapor transmission rate of 91 g-micron/m²/day (0.23 g-mil/100in²lday).

TABLE 3 reports different collapsed blown films of about 254 micron (10 mil) total thickness and thirteen layers. Example 3a differs from Comparative Example 7a in that layers two, four, six, eight, ten, and twelve of Example 3a comprise M6020 HDPE in combination with hydrocarbon resin and nucleating agent while layers two, four, six, eight, ten, and twelve of Comparative Example 7a do not comprise Piccolyte® S135 hydrocarbon resin. As shown in TABLE 3, Example 3a affords a reduced normalized moisture vapor transmission rate of 87 g-micron/m²/day (0,22 g-mil/100in²/day) as compared to Comparative Example 7a, which affords a normalized moisture vapor transmission rate of 138 g-micron/m²/day (0.35 g-mil/100in²/day). In further embodiments, a polyethylene terephthalate, such as PETG, or another rigid component (as described above) may be coated on either or both sides of the film of Example 3a.

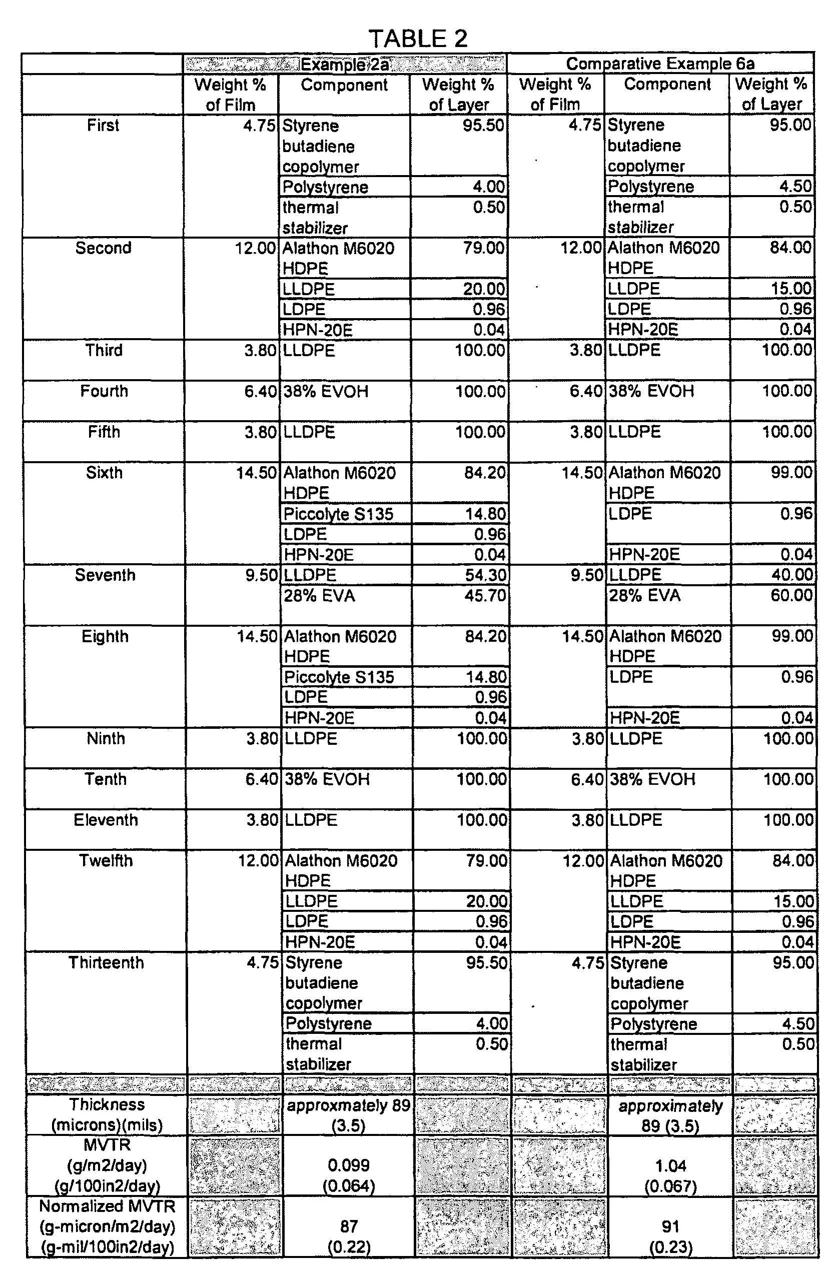

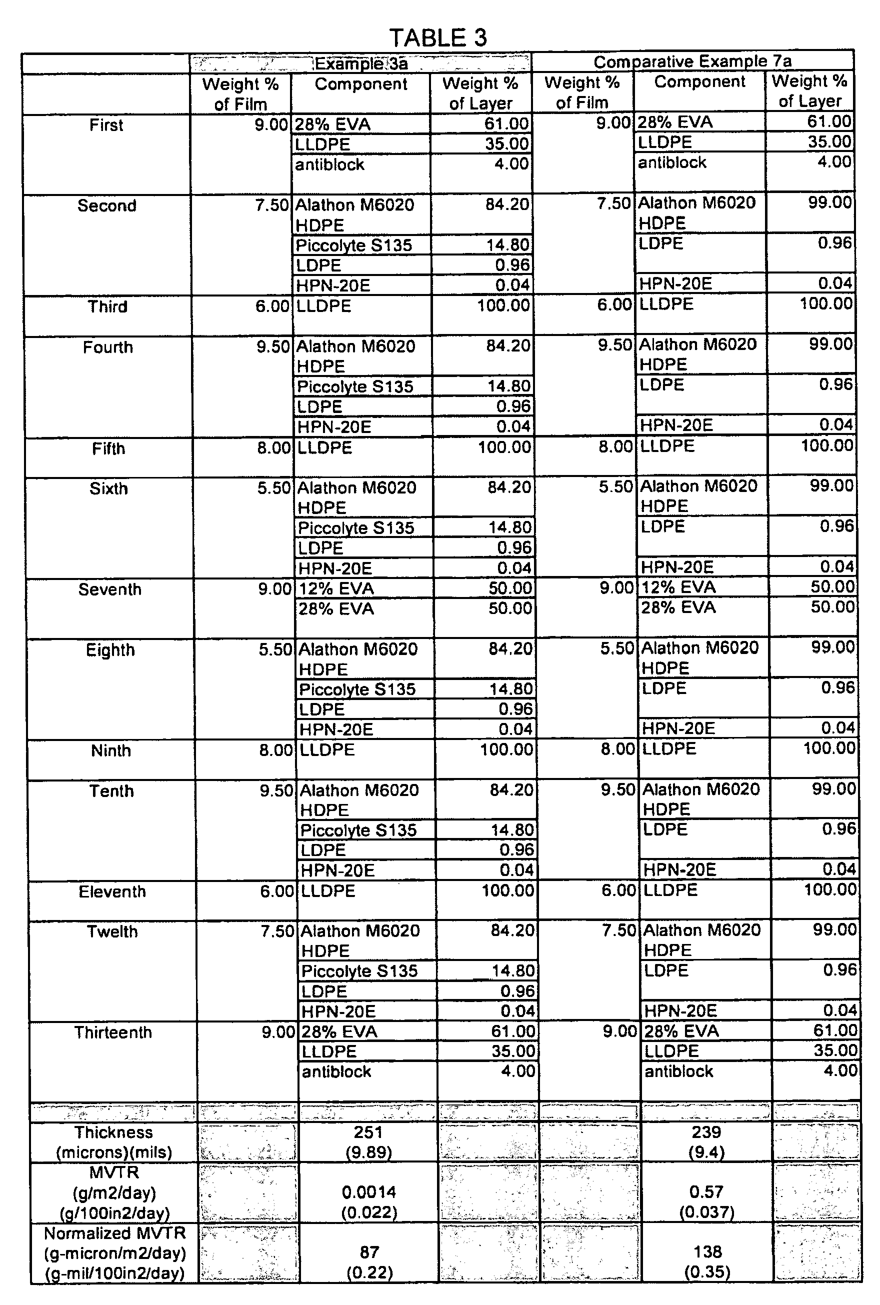

TABLE 4 reports three layer films with approximately 38 micron (1.5 mil) thickness. Example 4a is a film with a third layer blend containing nominally 85 % by weight M6020 HDPE, 15 % by weight Regalite® T1140 hydrocarbon resin and 800 ppm (0.08 % by weight) nucleating agent. The hydrocarbon resin was compounded into the M6020 HDPE at 15 % by weight prior to extrusion. This compound was blended with a nucleating agent masterbatch (e.g., Polybatch® CLR 122 comprising LDPE and calcium hexahydrophthalate) at the film line and extruded in the third layer of the film. The same film structure was run with both unmodified M6020 HDPE (Comparative Example 9a) thinned to 38 micron (1.5 mil) and M6020 HDPE combined with nucleating agent (Comparative Example 8a). A normalized moisture vapor transmission rate measured after one week shows a barrier improvement of 20% for the HDPE M6020 with nucleating agent (Comparative Example 8a) as compared to unmodified M6020 HDPE (Comparative Example 9a), and a barrier improvement of 50% for the blend of M 6020 HDPE, hydrocarbon resin and nucleating agent (Example 4a) as compared to unmodified M6020 HDPE (Comparative Example 9a) (all values normalized for gauge). Without wishing to be bound by theory, it is believed that the nucleation acts on the crystal phase, and the hydrocarbon resin reduces the free volume in the amorphous phase, leading to the additive effect of the two technologies.

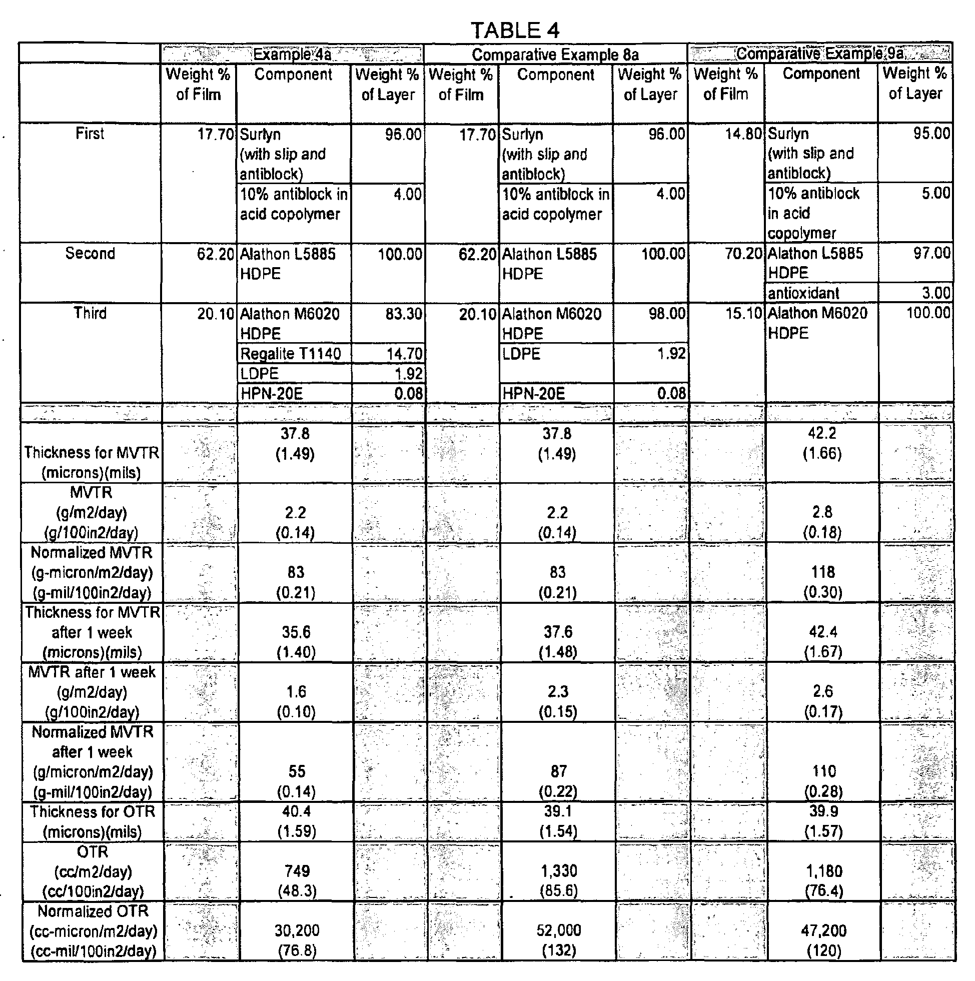

TABLE 5 reports additional three layer films with approximately 38 micron (1.5 mil) thickness. The films of TABLE 5 have an ionomer/HDPE/HDPE blend structure. The first and second layers of each of the films in TABLE 5 are the identical. The third layers (the outer skin layers) are different. Comparative Example 10a includes an outer skin layer with 85 % by weight M6020 HDPE and 15 % by weight hydrocarbon resin. This film has a normalized water vapor transmission rate of 75 g-micron/m²/day (0.19 g-mil/100in²/day). The addition of nucleating agent decreases the normalized moisture vapor transmission rate, as shown by Examples 5a, 6a and 7a. Examples 5a, 6a and 7a further illustrate the optimization of the amount of hydrocarbon resin for 0.08 % by weight nucleating agent. Example 5a presents the lowest moisture vapor transmission rate reported in TABLE 5. In this example, hydrocarbon resin is present at 10.2 % by weight. Examples 6a and 7a illustrate that increasing the % by weight of hydrocarbon resin has an undesired effect of increasing the moisture vapor transmission rate. Thus, without wishing to be bound by theory, it is postulated that when the % by weight hydrocarbon resin content is too high, the activity of the nucleating agent is hindered and the synergistic effect of the hydrocarbon resin and the nucleating agent is minimized.

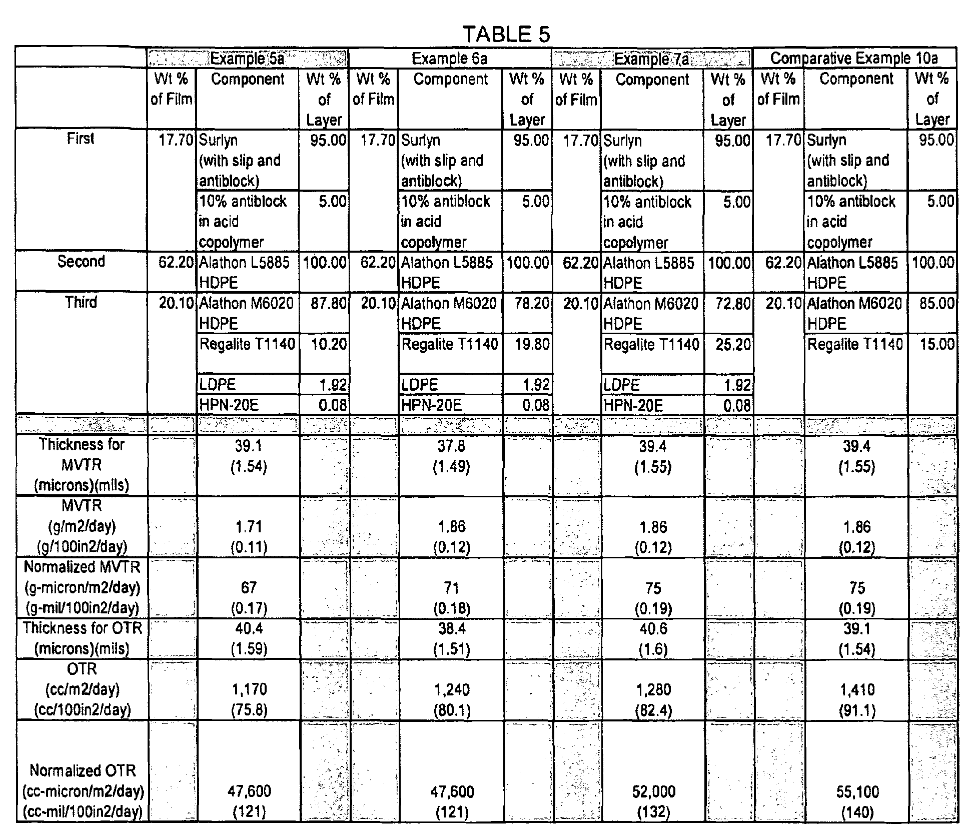

TABLE 6 reports additional three-layer films using different hydrocarbon resins. Examples 8a and 9a illustrate the use of Piccolyte® S135 and Arkon® P-140 hydrocarbon resins in combination with M6020 HDPE and nucleating agent in the third layer of the film. The normalized moisture vapor transmission rate for each of these films is 75 (0.19) and 79 g-micron/m²/day (0.20 g-mil/100in²/day), respectively. Example 10a illustrates the use of Plastolyn® R1140 hydrocarbon resin in combination with M6020 HDPE and nucleating agent in the middle layer of the film; this structure affords a normalized moisture vapor transmission rate of 59 g-micron/m²/day (0.15 g-mil/100/in²/day).

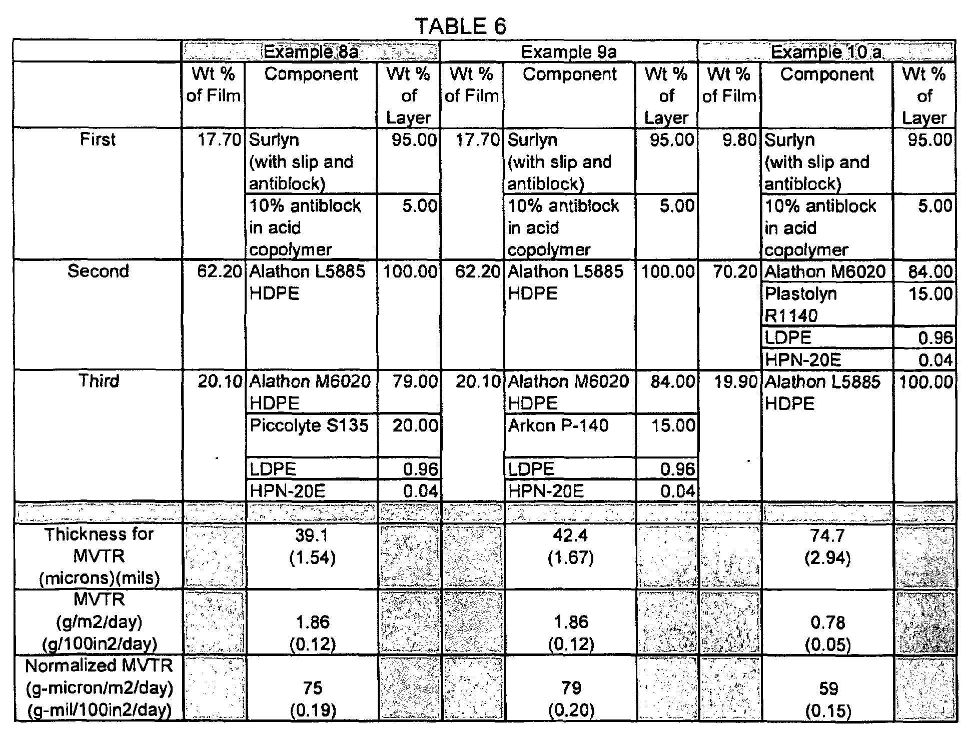

The above description, the examples and the embodiments disclosed in the examples and otherwise are illustrative only and should not be interpreted as limiting. The present invention includes the description, the examples and the embodiments disclosed; but it is not limited to such description, examples or embodiments. Modifications and other embodiments will be apparent to those skilled in the art, and all such modifications and other embodiments are intended and deemed to be within the scope of the present invention as defined by the claims.

## Claims

1. A film comprising
at least one moisture barrier layer comprising a polymer blend comprising (a) high density polyethylene in an amount from 69% to 90% by weight of the blend, wherein the high density polyethylene has a melt index of at least 1.0 g/10 min and a density greater than 0.958 g/cc; (b) hydrocarbon resin in an amount from 5% to 30% by weight of the blend; and (c) nucleating agent in an amount from 0.01% to 1% by weight of the blend; and at least one additional layer comprising an ionomer, a high density polyethylene, a polyethylene terephthalate, a copolymer of ethylene and an ester, or a styrene butadiene copolymer;
wherein the film is a non-oriented film and has a normalized moisture vapor transmission rate of no greater than 118 g-micron/m²/day (0.30 g-mil/100in²/day) as measured at 37.8°C (100 °F) and 90% external relative humidity.

2. A film according to claim 1, wherein the polymer blend comprises high density polyethylene in an amount from 72% to 88% by weight of the blend.

3. A film according to claim 1 or claim 2, wherein the polymer blend comprises high density polyethylene in an amount from 75% to 85% by weight of the blend.

4. A film according to any preceding claim, wherein the polymer blend comprises hydrocarbon resin in an amount from 5% to 20% by weight of the blend.

5. A film according to any preceding claim, wherein the polymer blend comprises hydrocarbon resin in an amount from 10% to 20% by weight of the blend.

6. A film according to any preceding claim, wherein the polymer blend comprises hydrocarbon resin in an amount from 10% to 15% by weight of the blend.

7. A film according to any preceding claim, wherein the polymer blend comprises nucleating agent in an amount from 0.04% to 0.10% by weight of the blend.

8. A film according to any preceding claim, wherein the film has a moisture vapor transmission rate of less than 118 g-micro/m²/day (0.30 g-mil/100 in²/day).

9. A film according to any preceding claim, wherein the film has a moisture vapor transmission rate of no greater than 79 g-micron/m²/day (0.20 g-mil/100 in²/day).

10. A film according to any preceding claim, wherein the film has a moisture vapor transmission rate of no greater than 59 g-micron/m²/day (0.15 g-mil/100 in²/day).

11. A film according to any preceding claim, wherein the nucleating agent comprises a glycerol alkoxide salt and/or a hexahydrophthalic acid salt.

12. A film according to claim 11, wherein the glycerol alkoxide salt is a zinc glycerolate salt and the hexahydrophthalic acid salt is calcium hexahydrophthalate.

13. A film according to any preceding claim, wherein the film comprises an oxygen barrier material and the film has a normalized oxygen transmission rate of less than 59,100 cc-micron/m²/day (150 cc-mil/100 in²/day).

14. A film according to any preceding claim, wherein the film comprises an oxygen barrier material and the film has a normalized oxygen transmission rate of less than 39,400 cc-micron/m²/day (100 cc-mil/100 in²/day).

15. A film according to any preceding claim, further comprising a second moisture barrier layer comprising the polymer blend.

16. A film according to any preceding claim, wherein the film has a thickness of less than 76.2 micron (3.00 mil).

17. A film according to claim 16, wherein the film has a thickness of less than 43.2 micron (1.70 mil).

18. A packaging article comprising a film according to any preceding claim.

19. A packaging article according to claim 18, wherein the packaging article is a rigid article or a semi-rigid article.

## Patentansprüche

1. Film, umfassend
wenigstens eine Feuchtigkeitssperrschicht, umfassend ein Polymergemisch umfassend (a) Polyethylen mit hoher Dichte in einer Menge von 69 bis 90 Gew.-% des Gemischs, wobei das Polyethylen mit hoher Dichte einen Schmelzindex von wenigstens 1,0 g/10 min und eine Dichte von größer als 0,958 g/cc aufweist; (b) Kohlenwasserstoffharz in einer Menge von 5 bis 30 Gew.-% des Gemischs; und (c) ein Nukleierungsmittel in einer Menge von 0,01 bis 1 Gew.-% des Gemischs; und wenigstens eine zusätzliche Schicht umfassend ein Ionomer, ein Polyethylen mit hoher Dichte, ein Polyethylenterephthalat, ein Copolymer von Ethylen und einem Ester oder ein Styrol-Butadien-Copolymer;
wobei der Film ein nichtorientierter Film ist und eine normalisierte Wasserdampfdurchlässigkeitsrate von nicht größer als 118 g-Mikrometer/m²/Tag (0,30 g-mil/100 in²/Tag) wie gemessen bei 37,8 °C (100 °F) und 90 % externer relativer Feuchtigkeit aufweist.

2. Film gemäß Anspruch 1, wobei das Polymergemisch Polyethylen mit hoher Dichte in einer Menge von 72 bis 88 Gew.-% des Gemischs umfasst.

3. Film gemäß Anspruch 1 oder Anspruch 2, wobei das Polymergemisch Polyethylen mit hoher Dichte in einer Menge von 75 bis 85 Gew.-% des Gemischs umfasst.

4. Film gemäß einem der vorstehenden Ansprüche, wobei das Polymergemisch Kohlenwasserstoffharz in einer Menge von 5 bis 20 Gew.-% des Gemischs umfasst.

5. Film gemäß einem der vorstehenden Ansprüche, wobei das Polymergemisch Kohlenwasserstoffharz in einer Menge von 10 bis 20 Gew.-% des Gemischs umfasst.

6. Film gemäß einem der vorstehenden Ansprüche, wobei das Polymergemisch Kohlenwasserstoffharz in einer Menge von 10 bis 15 Gew.-% des Gemischs umfasst.

7. Film gemäß einem der vorstehenden Ansprüche, wobei das Polymergemisch Nukleierungsmittel in einer Menge von 0,04 bis 0,10 Gew.-% des Gemischs umfasst.

8. Film gemäß einem der vorstehenden Ansprüche, wobei der Film eine Wasserdampfdurchlässigkeitsrate von weniger als 118 g-Mikrometer/m²/Tag (0,30 g-mil/100 in²/Tag) aufweist.

9. Film gemäß einem der vorstehenden Ansprüche, wobei der Film eine Wasserdampfdurchlässigkeitsrate von nicht größer als 79 g-Mikrometer/m²/Tag (0,20 g-mil/100 in²/Tag) aufweist.

10. Film gemäß einem der vorstehenden Ansprüche, wobei der Film eine Wasserdampfdurchlässigkeitsrate von nicht größer als 59 g-Mikrometer/m²/Tag (0,15 g-mil/100 in²/Tag) aufweist.

11. Film gemäß einem der vorstehenden Ansprüche, wobei das Nukleierungsmittel ein Glycerolalkoxidsalz und/oder ein Hexahydrophthalsäuresalz umfasst.

12. Film gemäß Anspruch 11, wobei das Glycerolalkoxidsalz ein Zinkglycerolatsalz ist und das Hexahydrophthalsäuresalz Calciumhexahydrophthalat ist.

13. Film gemäß einem der vorstehenden Ansprüche, wobei der Film ein Sauerstoffsperrmaterial umfasst und der Film eine normalisierte Sauerstoffdurchlässigkeitsrate von kleiner als 59.100 cc-Mikrometer/m²/Tag (150 ccmil/100 in²/Tag) aufweist.

14. Film gemäß einem der vorstehenden Ansprüche, wobei der Film ein Sauerstoffsperrmaterial umfasst und der Film eine normalisierte Sauerstoffdurchlässigkeitsrate von kleiner als 39.400 cc-Mikrometer/m²/Tag (100 ccmil/100 in²/Tag) aufweist.

15. Film gemäß einem der vorstehenden Ansprüche, ferner umfassend eine zweite Feuchtigkeitssperrschicht, die das Polymergemisch umfasst.

16. Film gemäß einem der vorstehenden Ansprüche, wobei der Film eine Dicke von weniger als 76,2 Mikrometer (3,00 mil) aufweist.

17. Film gemäß Anspruch 16, wobei der Film eine Dicke von weniger als 43,2 Mikrometer (1,70 mil) aufweist.

18. Verpackungsgegenstand, umfassend einen Film gemäß einem der vorstehenden Ansprüche.

19. Verpackungsgegenstand gemäß Anspruch 18, wobei der Verpackungsgegenstand ein starrer Gegenstand oder ein halbstarrer Gegenstand ist.

## Revendications

1. Film comprenant :
au moins une couche barrière s'opposant au passage de l'humidité, contenant un mélange de polymères comprenant (a) un polyéthylène de haute densité dans une quantité de 69 % à 90 % en poids du mélange, le polyéthylène de haute densité ayant un indice de fusion d'au moins 1,0 g/10 min et une densité supérieure à 0,958 g/cc ; (b) une résine hydrocarbure dans une quantité de 5 % à 30 % en poids du mélange ; et (c) un agent de nucléation dans une quantité de 0,01 % à 1% en poids du mélange ; et au moins une couche additionnelle comprenant un ionomère, un polyéthylène de haute densité, un téréphtalate de polyéthylène, un copolymère d'éthylène et d'un ester, ou un copolymère de styrène-butadiène ;
le film étant un film non orienté et ayant un coefficient normalisé de transmission de la vapeur d'eau qui n'est pas supérieur à 118 g-micron/m²/jour (0,30 g-millième de pouce/100 pouces carrés/jour), mesuré à 37,8 °C (100 °F) et à un taux d'humidité relative externe de 90 %.

2. Film selon la revendication 1, dans lequel le mélange de polymères comprend un polyéthylène de haute densité dans une quantité de 72 % à 88 % en poids du mélange.

3. Film selon la revendication 1 ou la revendication 2, dans lequel le mélange de polymères comprend un polyéthylène de haute densité dans une quantité de 75 % à 85 % en poids du mélange.

4. Film selon l'une quelconque des revendications précédentes, dans lequel le mélange de polymères comprend une résine hydrocarbure dans une quantité de 5 % à 20 % en poids du mélange.

5. Film selon l'une quelconque des revendications précédentes, dans lequel le mélange de polymères comprend une résine hydrocarbure dans une quantité de 10 % à 20 % en poids du mélange.

6. Film selon l'une quelconque des revendications précédentes, dans lequel le mélange de polymères comprend une résine hydrocarbure dans une quantité de 10 % à 15 % en poids du mélange.

7. Film selon l'une quelconque des revendications précédentes, dans lequel le mélange de polymères comprend un agent de nucléation dans une quantité de 0,04 % à 0,10 % en poids du mélange.

8. Film selon l'une quelconque des revendications précédentes, le film ayant un coefficient de transmission de la vapeur d'eau inférieur à 118 g-micron/m²/jour (0,30 g-millième de pouce/100 pouces carrés/jour).

9. Film selon l'une quelconque des revendications précédentes, le film ayant un coefficient de transmission de la vapeur d'eau qui n'est pas supérieur à 79 g-micron/m²/jour (0,20 g-millième de pouce/100 pouces carrés/jour).

10. Film selon l'une quelconque des revendications précédentes, le film ayant un coefficient de transmission de la vapeur d'eau qui n'est pas supérieur à 59 g-micron/m²/jour (0,15 g-millième de pouce/100 pouces carrés/jour).

11. Film selon l'une quelconque des revendications précédentes, dans lequel l'agent de nucléation comprend un sel alcoxyde de glycérol et/ou un sel d'acide hexahydrophtalique.

12. Film selon la revendication 11, dans lequel le sel alcoxyde de glycérol est un sel glycérolate de zinc et le sel d'acide hexahydrophtalique est l'hexahydrophtalate de calcium.

13. Film selon l'une quelconque des revendications précédentes, le film comprenant un matériau barrière s'opposant au passage de l'oxygène et le film ayant un coefficient normalisé de transmission de l'oxygène inférieur à 59 100 cc-micron/m²/jour (150 cc-millième de pouce/100 pouces carrés/jour).

14. Film selon l'une quelconque des revendications précédentes, le film comprenant un matériau barrière s'opposant au passage de l'oxygène et le film ayant un coefficient normalisé de transmission de l'oxygène inférieur à 39 400 cc-micron/m²/jour (100 cc-millième de pouce/100 pouces carrés/jour).

15. Film selon l'une quelconque des revendications précédentes, comprenant en outre une deuxième couche barrière s'opposant au passage de l'humidité contenant le mélange de polymères.

16. Film selon l'une quelconque des revendications précédentes, le film ayant une épaisseur inférieure à 76,2 microns (3,00 millièmes de pouce).

17. Film selon la revendication 16, le film ayant une épaisseur inférieure à 43,2 microns (1,70 millième de pouce).

18. Article d'emballage comprenant un film selon l'une quelconque des revendications précédentes.

19. Article d'emballage selon la revendication 18, l'article d'emballage étant un article rigide ou un article semi-rigide.
